# FASCICULE DE BREVET EUROPEEN

(11) **EP 2 509 776 B1**
(45) Date de publication et mention de la délivrance du brevet: **05.03.2014**
(21) Numéro de dépôt: 10790765.1
(22) Date de dépôt: 10.12.2010
(51) Int. Cl.: B29C 70/48, B29C 70/46, B29K 67/00, B29B 17/04, B29B 9/14, B29C 43/00, C08J 5/04, B29C 45/00

(54) **PROCÉDÉ DE FABRICATION D'UN ARTICLE POLYESTER COMPOSITE**
VERFAHREN ZUR HERSTELLUNG EINES POLYESTERVERBUNDARTIKELS
METHOD FOR MANUFACTURING A COMPOSITE POLYESTER ARTICLE

(30) Priorité: 11.12.2009 FR 0958872
(43) Date de publication de la demande: 17.10.2012
(73) Titulaire: Rhodia Operations, 93306 Aubervilliers (FR)
(72) Inventeur: JEOL, Stéphane, 69006 Lyon (FR); ORANGE, Gilles, F-69390 Vourles (FR); TOURAUD, Franck, F-38780 Eyzin Pinet (FR)
(74) Mandataire: Benvenuti, Federica
(86) Numéro de dépôt international: PCT/EP2010/069340
(87) Numéro de publication internationale: WO 2011/070135

(56) Documents cités:
- EP-A1- 1 892 072
- EP-A1- 1 990 369
- DE-A1-102005 057 181
- GB-A- 2 313 312
- US-A- 5 019 450
- US-A1- 2009 246 468

## Description

La présente invention concerne l'utilisation de polyesters de haute fluidité servant à l'imprégnation de matériaux de renfort prenant la forme d'étoffe de tissus industriels pour la fabrication de matériaux composites. Le domaine de l'invention est celui des matériaux composites et de leurs procédés de fabrication.

Dans le domaine des matériaux hautes-performances, les composites ont pris une place prépondérante, de par leurs performances et les gains de poids qu'ils autorisent. Les composites hautes performances les plus connus à ce jour sont obtenus à partir de résines thermodurcissables, dont l'utilisation est limitée aux applications de faibles à moyennes séries, principalement dans l'aéronautique, le sport automobile, et dans les meilleurs cas, présentant des temps de fabrication voisins d'une quinzaine de minutes, comme par exemple, lors de la fabrication de skis. Le coût de ces matériaux, et/ou les temps de fabrication, les rendent difficilement compatibles avec un usage en grande série. De plus, l'utilisation de résines thermodurcissables implique souvent la présence de solvants et de monomères. Enfin, ces composites sont difficilement recyclables.

Le document DE102005057181 décrit un procédé pour lier un matériau renforcé en fibres à un matériau moulé par injection, ledit procédé étant inséré sous pression dans le matériau renforcé ce qui crée des liaisons entrelacées entre les le matériau plastique additionnel et les fibres du matériau plastique renforcé

Une réponse, en regard des temps de fabrication, est donnée par les composites à matrice thermoplastique. Les polymères thermoplastiques sont en général connus pour leur viscosité élevée, ce qui constitue un frein en ce qui concerne l'imprégnation des matériaux de renfort, composés en général de faisceaux multifilamentaires très denses. Il résulte de l'emploi des matrices thermoplastiques disponibles sur le marché, une difficulté d'imprégnation nécessitant soit des temps d'imprégnation prolongés, soit des pressions de mise en oeuvre importantes. Dans la majeure partie des cas, les matériaux composites obtenus à partir de ces matrices peuvent présenter des microvides et des zones non imprégnées. Ces microvides causent des chutes de propriétés mécaniques, un vieillissement prématuré du matériau ainsi que des problèmes de délaminage lorsque le matériau se compose de plusieurs couches de renforts. Ce phénomène de perte de propriétés mécaniques est par ailleurs accentué lorsque les temps de cycle pour la fabrication des articles composites diminuent.

L'objectif de la présente invention est donc de remédier à ces inconvénients en proposant un article composite qui puisse être fabriqué avec des temps de cycle courts tout en ayant de bonnes propriétés d'usage, telles que de bonnes propriétés mécaniques.

La présente invention concerne un procédé de fabrication d'un article composite comprenant :
a) une étape d'imprégnation d'une étoffe de renfort avec une composition polyester semi-aromatique à l'état fondu, présentant une viscosité fondue η comprise entre 20 et 200 Pa.s, ladite étoffe de renfort étant maintenue à une température de plus ou moins 50°C par rapport à la température de fusion dudit polyester, ladite viscosité fondue étant mesurée à l'aide d'un rhéomètre plan-plan de diamètre 50 mm, sous un balayage en cisaillement par pallier allant de 1 à 160 s⁻¹, par fusion d'un film dudit polyester semi-aromatique d'une épaisseur de 150 µm à une température de 25 à 30°C au-dessus de son point de fusion ; et
b) une étape de refroidissement et ensuite de récupération de l'article composite.

La demanderesse a découvert de manière inattendue que l'utilisation de polyesters semi-aromatiques de haute fluidité pour la fabrication d'articles composites permettaient l'obtention d'articles présentant de bonnes propriétés mécaniques, telles que notamment la rigidité, la résistance à la rupture, la résistance aux chocs, et le comportement en fatigue, même lorsqu'ils sont fabriqués avec des temps de cycle plus courts que ceux habituellement utilisés, et sans aucun autre traitement. Ceci permet de fournir un matériau composite présentant un avantage de réduction de coûts de fabrication, par l'emploi d'un outillage mettant en oeuvre des temps de cycles raccourcis.

Les articles obtenus par le procédé selon l'invention présentent notamment les avantages de rigidité, légèreté, et recyclabilité, et un bon aspect de surface.

Plus précisément, l'invention concerne un procédé de fabrication d'un article composite comprenant au moins :
a) une étape d'imprégnation d'une étoffe de renfort avec une composition polyester semi-aromatique à l'état fondu, présentant une viscosité fondue η comprise entre 20 et 200 Pa.s, ladite étoffe de renfort étant maintenue à une température de plus ou moins 50°C par rapport à la température de fusion dudit polyester ;
   l'imprégnation de l'étoffe par la composition polyester étant réalisée soit :
   - par injection de la composition polyester à l'état fondu sur l'étoffe ; ou
   - par mise en présence de l'étoffe avec la composition polyester sous forme de poudre ou de film, puis mise en fusion de ladite composition polyester ; et
b) une étape de refroidissement et ensuite de récupération de l'article composite.

On entend par étoffe, une surface textile obtenue par assemblage de fils ou de fibres solidarisés par un procédé quelconque, tel que notamment collage, feutrage, tressage, tissage, tricotage. Ces étoffes sont aussi désignées comme des réseaux fibreux ou filamenteux. Par fil, on entend un monofilament, un fil multifilamentaire continu, un filé de fibres, obtenu à partir d'un unique type de fibres ou de plusieurs types de fibres en mélange intime. Le fil continu peut être également obtenu par assemblage de plusieurs fils multifilamentaires. Par fibre, on entend un filament ou un ensemble de filaments coupés, craqués ou convertis.

Les fils et/ou fibres de renfort selon l'invention sont préférentiellement choisis parmi les fils et/ou les fibres de carbone, de verre, d'aramides, de polyimides, de lin, de chanvre, de sisal, de coir, de jute, de kenaf et/ou de leur mélange. Plus préférentiellement, les étoffes de renfort sont uniquement constituées de fils et/ou fibres de renfort choisis parmi les fils et/ou les fibres de carbone, de verre, d'aramides, de polyimides, de lin, de chanvre, de sisal, de coir, de jute, de kenaf et/ou de leur mélange.

Ces étoffes ont préférentiellement un grammage, c'est-à-dire le poids au mètre carré, compris entre 100 et 1000 g/m².

Leur structure peut être aléatoire, unidirectionelle (1D), ou multidirectionelle (2D, 2,5D, 3D ou autre).

De préférence, les polyesters semi-aromatiques présentent une viscosité fondue η comprise entre 30 et 150 Pa.s.

La masse moléculaire moyenne en nombre (Mn) des polyesters semi-aromatiques est préférentiellement comprise entre 5 000 g/mol et 20 000 g/mol, ayant des propriétés mécaniques suffisantes et une certaine tenue lors des différents procédés de mises en forme.

Les polyesters semi-cristallins sont particulièrement préférés.

Les polyesters semi-aromatiques sont de préférence choisis dans le groupe constitué des polyesters obtenus par polycondensation d'au moins un diacide aromatique ou un diester correspondant avec un diol aliphatique, cycloaliphatique ou aromatique. Les diacides aromatiques et leur diesters peuvent être par exemple choisis parmi l'acide téréphtalique, le téréphtalate de diméthyle, l'acide isophtalique, l'isophtalate de diméthyle, l'acide 5-tert-butyle isophtalique, l'acide 4,4'-biphenyle dicarboxylique et les isomères de naphtalate de diméthyle. Les diols peuvent être par exemple choisis parmi l'éthylène glycol, le diéthylène glycol, le propylène glycol, le butylène glycol, l'isosorbide et le 1,4-cyclohexane diméthanol.

Selon un mode de réalisation particulièrement avantageux, les polyesters semi-aromatiques selon l'invention sont choisis dans le groupe constitué du polyéthylène téréphtalate (PET), du polybutylène téréphtlalate (PBT), du polytriméthylène téréphtalate (PTT) et du polyéthylène naphtalate (PEN).

Le PET et le PBT sont des polyesters semi-cristallins (Tf_{PET}=245-250°C, Tf_{PBT}=225°C). Ce sont des polycondensats qui sont sensibles à l'hydrolyse (réaction inverse de l'estérification) lors de leur transformation. Par exemple, un polyester PET ou PBT doit avoir une teneur en eau inférieure à 100 ppm lors de leur mise en oeuvre pour ne pas trop faire chuter les masses molaires, ce qui implique une grande rigueur dans le séchage, le stockage et la mise en oeuvre des polyesters.

A la différence des polyamides, ces polyesters reprennent peu d'eau, de l'ordre de 0,3-0,6% à saturation, ce qui leur garantit une bonne stabilité dimensionnelle en milieu humide. Leur densité est voisine de 1,3-1,4. Les polyesters semi-aromatiques utilisés dans le cadre de l'invention tels que le PET ou le PBT sont plus sensibles à l'hydrolyse que les polyamides. Ainsi, on observe une hydrolyse dès 100 ppm d'eau pour le PET et 200 ppm d'eau pour le PBT tandis que l'hydrolyse d'un polyamide PA 66 standard s'effectue dès 2000 ppm d'eau.

Pour produire des polyesters de faible masse molaire, plusieurs voies distinctes suivantes existent. Une première voie consiste en la synthèse directe de polyesters en voie fondue en réacteur de polycondensation selon des procédés bien connus de l'homme de l'art du type « estérification directe » à partir des diacides et des diols ou « transestérification » à partir des diesters et des diols. Par exemple pour le PET, la synthèse en voie fondue en réacteur peut être réalisée à partir d'acide téréphtalique et d'éthylène glycol (estérification directe) ou à partir de téréphtalate de diméthyle et d'éthylène glycol (transestérification). Des exemples de procédés de synthèses sont décrits dans les Techniques de l'ingénieur 06/2004, J6488, 12 p. Cette voie permet ainsi un contrôle de la masse molaire par arrêt de la phase de polycondensation à un temps donné. Une deuxième voie consiste en l'hydrolyse, l'alcoolyse, l'acidolyse ou encore l'aminolyse de polyesters standard. Enfin, une troisième voie, notamment développée pour le PBT, consiste en la polymérisation de monomères cycliques CBT (butylène téréphtalate cyclique) pour la préparation de PBT par ouverture de cycle.

Les polyesters du type PET, PBT, PTT sont généralement synthétisés en voie fondue en réacteur de polycondensation à partir de procédés dits d'estérification directe (voie PTA) de l'acide téréphtalique avec un excès de glycol ou de transestérification (voie DMT) du téréphtalate de diméthyle avec un excès de glycol.

Comme toute réaction équilibrée, la présence d'une quantité d'eau trop importante lors de la mise en oeuvre par fusion des granulés de polyester tend à hydrolyser les chaînes et ainsi réduire la masse molaire du polyester et les propriétés qui en découlent. Ainsi, pour éviter l'hydrolyse massive des chaînes polyester lors de leur mise en oeuvre, il est conseillé d'avoir une teneur en eau inférieure à 200 ppm (0,02%) pour le PBT et inférieure à 100 ppm (0,01%) pour le PET aux températures de mise en oeuvre classique de ces polyesters. Cette teneur en eau varie selon la nature chimique du polyester et la température de mise en oeuvre.

Des polyesters de haute fluidité peuvent notamment être obtenus en contrôlant leur poids moléculaire lors de leur synthèse, notamment par un contrôle du temps de polymérisation, par un contrôle de la stoechiométrie des monomères ou encore par l'addition avant ou pendant la polymérisation de monomères modifiant la longueur des chaînes tels que notamment des limiteurs de chaîne monoalcool et/ou monoacide carboxylique. Il est également possible d'ajouter à la polymérisation des composés multifonctionnels pour apporter des ramifications.

Des polyesters selon l'invention peuvent aussi être obtenus par mélange, notamment en fondu, de polyesters avec des monomères modifiant la longueur des chaînes, tel que notamment des diols, diacides carboxyliques, monoalcool et/ou monoacides carboxyliques ou encore avec de l'eau, des diamines ou des monoamines.

La composition de l'invention peut également comprendre les copolyesters dérivés notamment des polyesters ci-dessus, ou les mélanges de ces polyesters ou (co)polyesters.

L'étape d'imprégnation du polyester semi-aromatique de haute fluidité et de l'étoffe de renfort peut être réalisée de diverses manières, selon divers procédés possibles. Il est parfaitement possible de procéder à l'imprégnation d'une ou plusieurs étoffes de renfort.

Selon le procédé de l'invention, l'étoffe de renfort est maintenue à une température de plus ou moins 50°C par rapport à la température de fusion dudit polyester. Ainsi par exemple pour un polyester ayant une température de fusion de 230°C, l'étoffe de renfort est maintenue a une température comprise entre 180 et 280°C, bornes incluses.

On peut par exemple injecter la composition polyester semi-aromatique en fondu dans une chambre de moulage comprenant au moins une ou plusieurs étoffes de renfort. L'intérieur de la chambre de moulage est à une température de plus ou moins 50°C par rapport à la température de fusion dudit polyester semi-aromatique. On peut procéder ensuite au refroidissement de la chambre de moulage et de l'article obtenu, pour enfin récupérer ledit article. Ce procédé est connu également sous le nom de procédé de moulage par transfert de résine (RTM) en procédé thermodure, qui consiste à injecter de la résine dans un moule fermé dans lequel ont été préalablement placées des fibres de renforcement. Ce procédé peut être réalisé sous pression.

On peut également réaliser un article composite selon l'invention par un procédé de « film stacking » qui consiste en une compression en température d'un empilement d'étoffes de renfort et de films de polyester. On procède notamment à la mise en contact d'une ou plusieurs étoffes de renfort et un ou plusieurs films de polyester semi-aromatique de haute fluidité et imprégnation des étoffes par fusion du polyester semi-aromatique. Les pressions nécessaires pour un bon assemblage sont généralement supérieures à 30 bars.

L'article composite obtenu par le procédé selon l'invention peut aussi être réalisé par mise en contact d'une ou plusieurs étoffes de renfort avec de la poudre d'un polyester semi-aromatique tel que défini précédemment, notamment de la poudre fine, et l'on réalise ladite imprégnation par fusion du polyester semi-aromatique, à une température égale ou supérieure à celle du point de fusion du polyester semi-aromatique, éventuellement sous pression.

Après l'imprégnation de l'étoffe de renfort par le polyester semi-aromatique, l'article est obtenu par solidification de la matrice. Ce refroidissement est effectué selon les propriétés recherchées pour le matériau obtenu.

Le refroidissement peut avantageusement être effectué rapidement de façon à éviter une cristallisation importante du polyester semi-aromatique, notamment pour maintenir les propriétés de l'article. Le refroidissement peut notamment être effectué en moins de 5 minutes, plus préférentiellement en moins d'une minute. Le moule peut par exemple être refroidi par un circuit de fluide froid. On peut aussi éventuellement transférer l'article composite dans un moule froid, éventuellement sous pression.

La composition polyester semi-aromatique et/ou l'article composite selon l'invention peuvent également comprendre tous les additifs habituellement utilisés dans les compositions à base de polyester semi-aromatique utilisées pour la fabrication d'articles. Ainsi, on peut citer à titre d'exemple d'additifs les stabilisants thermiques, stabilisants UV, antioxydants, lubrifiants, les pigments, colorants, plastifiants, charges de renfort, et agents modifiant la résistance aux chocs.

Des additifs pour améliorer la qualité des interfaces étoffes de renfort polyester semi-aromatique peuvent également être utilisés. Ces additifs peuvent être par exemple incorporés à la composition polyester semi-aromatique, incorporés dans les fils et/ou fibres de l'étoffe de renfort, présents sur les fils et/ou fibres de ladite étoffe, ou encore déposés sur l'étoffe de renfort. Ces additifs peuvent être des agents de couplage tels que ceux de type aminosilanes ou chlorosilanes, ou encore des agents fluidifiants ou mouillants, ou leur association.

Des charges renforçantes peuvent être incorporées à la composition polyester semi-aromatique. Ces charges peuvent être choisies parmi les charges fibreuses, tels que des fibres de verre courtes par exemple, ou des charges non fibreuses tels que le kaolin, le talc, la silice, le mica ou la wollastonite. Leur taille est généralement comprise entre 1 et 50 µm. Des charges sub-microniques voire nanométriques peuvent également être utilisées, seules ou en complément des autres charges.

La présente demande concerne un article susceptible d'être obtenu par le procédé de l'invention. L'article peut notamment être un article composite à base de polyester semi-aromatique comprenant une étoffe de renfort, dans lequel le polyester semi-aromatique présente une viscosité fondue n comprise de 20 à 200 Pa.s.

Les articles obtenus par le procédé selon l'invention comprennent préférentiellement entre 25 et 80% en volume d'étoffe de renfort par rapport au poids total.

Les articles obtenus par le procédé selon l'invention peuvent être des articles finis ou semi-finis, pouvant aussi être appelé pré-imprégnés. On peut par exemple procéder au thermoformage des articles composites sous forme de plaques pour leur donner une forme définie après refroidissement. La demande concerne ainsi des articles composites ou préformes susceptibles d'être obtenus par le procédé selon la présente invention.

Les articles obtenus par le procédé selon l'invention peuvent aussi être des structures de type sandwich présentant une âme insérée entre deux peaux. Les composites peuvent être utilisés pour former les couches externes, en les associant à une âme type nid d'abeille ou type mousse. Les couches peuvent être assemblées par collage chimique ou thermique.

Les structures composites obtenus par le procédé selon l'invention peuvent être employées dans de nombreux domaines tels que l'aéronautique, l'automobile, l'industrie électrique, l'industrie des sports et loisirs. Ces structures peuvent être utilisées pour réaliser des articles de sports tels que des skis ou bien pour réaliser des surfaces diverses telles que des planchers spéciaux, des cloisons, des carrosseries de véhicules, ou des panneaux publicitaires. Dans l'aéronautique ces structures sont utilisées notamment au niveau des carénages (fuselage, aile, empennage). Dans l'automobile, elles sont utilisées par exemple au niveau des planchers ou des supports tels que les tablettes arrières. Ces structures peuvent également être utilisées pour réaliser des composites transparents destinés notamment au domaine de l'ameublement.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

Différents polyesters PBT et PET ont été utilisés dans les exemples.

### Exemple 1 : Préparation des polyesters

PET1 (comparatif) : polyéthylène téréphtalate standard grade bouteille d'IV de l'ordre de 80 ml/g soit une masse molaire moyenne en nombre Mn d'environ 20 000 g/mol. (Tergal, grade T74F9).
PET2 : polyéthylène téréphtalate de plus faible viscosité
PET3 : polyéthylène téréphtalate de plus faible viscosité
PET 4 : polyéthylène téréphtélate de plus faible viscosité
PBT1 (comparatif) : polybutylène téréphtalate standard avec un MVR (MeltVolume-flowRate) de 20 cm³/10min. (DSM, grade Arnite T06200).
PBT2 : polybutylène téréphtalate de plus faible viscosité
PBT3 : polybutylène téréphtalate de plus faible viscosité

Pour les polymères servant de référence (PET1 et PBT1), les produits ont été séchés à réception à 130°C pendant 36h. Ils ont ensuite été broyés et séchés en étuve ventilée à 60°C, puis stockés en sac étanche jusqu'au moment de leur utilisation.

Les polymères de différentes viscosités ont été préparés par hydrolyse contrôlée. Après mesure du taux d'eau des produits tels que reçus, une très faible quantité d'eau distillée a été ajoutée afin d'obtenir les taux d'eau visés : 1 000 ppm, 2 000 ppm, et 3 000 ppm. Les produits ont alors été stockés en flacons étanches, et portés à 50°C pendant 12h, puis mélangés pour homogénéisation de l'ensemble. Une mesure du taux d'eau est alors effectuée par thermo-manométrie à 200°C afin de vérifier que le taux atteint est bien celui visé (PET 2 : 920 ppm, PET 3 : 1 990 ppm, PET 4 : 2 710 ppm ; PBT 2 : 1 020 ppm, PBT 3 : 1 990 ppm, PBT 4 : 2 800 ppm).

Pour le PBT 3 000 ppm, l'essai a été fait par trempage dans l'eau 4 jours et séchage au torchon pour enlever l'excès d'eau liquide en surface (équilibre à 2 800 ppm en théorie).

Les produits sont ensuite portés au-delà de leur point de fusion par passage dans une extrudeuse (monovis Fourne 18x24D, sans pack) avec un débit de 0.5 kg/h et un temps de séjour d'environ 3 minutes. Les températures sont de 280°C pour les PET, et 260°C pour les PBT. Le produit en sortie d'extrudeuse est refroidi dans un bac d'eau.

Les produits sont alors broyés puis séchés à 130°C sous vide pendant 16h et stockés en sac étanche jusqu'au moment de leur utilisation.

Ces polyesters ont été caractérisés par des mesures de viscosité à l'état fondu réalisés sur un rhéomètre cône-plan Ares Rheometrics (diamètre 25 mm, angle du cône 0,1 rad), à 280°C pour les polyesters PET et à 255°C pour les polyesters PBT. Les courbes de viscosité en fonction du taux de cisaillement montrent que les polymères considérés ont un comportement Newtonien : la viscosité retenue est la valeur au plateau (entre 10⁻¹ et 10² s⁻¹).

**Tableau 1 (Polyester PET)**

| | **Viscosité (Pa.s)** |
|---|---|
| PET1 | 226 |
| PET2 | 33 |
| PET3 | 8 |
| PET4 | 3 |

**Tableau 2 (Polyester PBT)**

| | Viscosité (Pa.s) |
|---|---|
| PBT1 | 400 |
| PBT2 | 130 |
| PBT3 | 105 |
| PBT4 | 58 |

### Exemple 2 : Préparation des composites

Les renforts utilisés dans les exemples sont sous forme de préformes en tissus de verre, coupés aux dimensions requises pour la fabrication des plaques c'est-à-dire 150 x 150 mm. L'étoffe de renfort utilisée est un tissu en fibre de verre (0°-90°) d'origine Synteen & Luckenhaus issu d'un roving de 1 200 tex, présentant un grammage de 600 g/m².

Les différents polymères considérés ont été préparés selon l'exemple 1 : ils sont sous forme de poudre sèche, de granulométrie inférieure à 500 µm.

La réalisation des pièces composites est faite au moyen d'une presse hydraulique Schwabenthan (Polystat 300A) à double plateaux contrôlés en température: plateaux chauffants (résistances chauffantes), et plateaux refroidis (circulation d'eau). Un moule métallique équipé d'une empreinte de dimensions 150 mm x 150 mm est utilisé.

Pour réaliser un composite contenant 80% en poids de fibres de verre (65% en volume) avec le tissus de grammage 600 g/m², on introduit dans le moule une préforme constituée d'un empilement comprenant un total de 6 feuilles de tissus de verre. La quantité totale de polymère est déposée sous forme poudre : chaque feuille de tissus est ainsi saupoudrée d'une quantité similaire de polymère de sorte que la quantité totale de polymère correspond à la composition visée pour le composite.

La température des plateaux de la presse est préalablement montée soit à 280°C pour les PET soit à 255°C pour les PBT avant l'introduction de la préforme. A cette température, la pression est appliquée entre quelques bars (5 bars) jusqu'à 100 bars et maintenue à cette valeur. L'ensemble est maintenu à la même température et pression, sans dégazage. Si nécessaire, il est effectué une série de dégazages, puis un maintien toujours à même température et pression. Le moule est alors transféré sur le dispositif plateaux refroidis et maintenu sous la pression de 100 bars. Différents types de cycle ont été utilisés : haute et moyenne pression, temps court et long.

Les pièces composites ainsi obtenues ont une dimension de 150x150 mm et une épaisseur de 2 mm environ.

### Exemple 3 : Caractérisation des composites base PBT

Deux types de cycles ont été réalisés : cycle de 20 min sous haute pression 100 bars (Cycle 1), cycle de 20 min sous basse pression 35 bars (Cycle 2). Ces temps correspondent à la durée totale du cycle entre la mise en température du moule et le refroidissement sous pression.

Les plaques 150x150 mm sont découpées afin d'obtenir des échantillons de dimensions 150x20x2 mm. Un traitement de conditionnement est alors réalisé avec un cycle de 60h à 70°C sous une humidité résiduelle RH de 62%, puis stabilisation 23°C RH50.

Les propriétés mécaniques ont été obtenues à 23°C, et humidité RH = 50% (stabilisation des éprouvettes 48h à 23°C, RH = 50%).

Les essais de flexion 3 points à température ambiante sont réalisés sur des éprouvettes parallélépipédiques (150x20x2 mm), selon la norme ISO N° 14125, sur une machine ZWICK 1478 : entre-axe de 64 mm, vitesse de traverse de 5 mm/min. Les valeurs de module élastique E de Young (GPa) et de contrainte σ max au pic (MPa) sont mesurées et calculées.

**Tableau 3**

| Résultats pour les pièces fabriquées à partir de PBT Cycle HP (1) et BP (2) | | | | |
|---|---|---|---|---|
| | **CYCLE 1 (100 bars)** | | **CYCLE 2 (35 bars)** | |
| **Polymère utilisé** | **Module élastique E (GPa)** | **Contrainte σ max (MPa)** | **Module élastique E (GPa)** | **Contrainte σ max (MPa)** |
| PBT1 | 21,5 | 170 | 20 | 125 |
| PBT2 | -- | -- | 23 | 220 |
| PBT3 | -- | -- | 24 | 205 |
| PBT4 | -- | -- | 24,2 | 220 |

Dans le cas d'un cycle de fabrication BP (cycle 2), les performances mécaniques obtenues sont sensiblement diminuées pour le PBT de référence : contrainte max (pic) de 125 MPa, pour une valeur de module à 20 GPa.

Avec les PBT de plus faible viscosité, les performances mécaniques obtenues selon le cycle BP (cycle 2) sont sensiblement améliorées : contrainte vers 220 MPa, et module vers 24 GPa.

### Exemple 4 : Caractérisation des composites base PET

Deux types de cycles ont été réalisés : cycle de 20 min sous haute pression 100 bars (Cycle 1), cycle de 20 min sous basse pression 35 bars (Cycle 2). Ces temps correspondent à la durée totale du cycle entre la mise en température du moule et le refroidissement sous pression.

Les plaques 150x150 mm sont découpées afin d'obtenir des échantillons de dimensions 150x20x2 mm. Un traitement de conditionnement est alors réalisé avec un cycle de 60h à 70°C sous une humidité résiduelle RH de 62%, puis stabilisation 23°C RH50.

Les propriétés mécaniques ont été obtenues à 23°C, et humidité RH = 50% (stabilisation des éprouvettes 48h à 23°C, RH = 50).

Les essais de flexion 3 points à température ambiante sont réalisés sur des éprouvettes parallélépipédiques (150x20x2 mm), selon la norme ISO N° 14125, sur une machine ZWICK 1478 : entre-axe de 64 mm, vitesse de traverse de 5 mm/min. Les valeurs de module élastique E de Young (GPa) et de contrainte σ max au pic (MPa) sont mesurées et calculées.

**Tableau 4**

| Résultats pour les pièces fabriquées à partir de PET Cycle HP (1) et BP (2) | | | | |
|---|---|---|---|---|
| | **CYCLE 1 (100 bars)** | | **CYCLE 2 (35 bars)** | |
| **Polymère utilisé** | **Module élastique E (GPa)** | **Contrainte σ max (MPa)** | **Module élastique E (GPa)** | **Contrainte σ max (MPa)** |
| PET1 | 29,6 | 500 | 30,1 | 495 |
| PET2 | -- | -- | 28 | 330 |
| PET3 | -- | -- | 26,5 | 250 |
| PET4 | -- | -- | 25,5 | 190 |

Dans le cas d'un cycle de fabrication BP (cycle 2), les performances mécaniques obtenues sont sensiblement similaires à celles obtenues avec le cycle HP (cycle 1) pour le PET de référence : contrainte max (pic) de 495 MPa, pour une valeur de module à 30 GPa.

Avec les PET de plus faible viscosité, les performances mécaniques obtenues selon le cycle BP (cycle 2) ont tendance à se dégrader : la contrainte évolue de 330 jusqu'à 190 MPa, et le module diminue vers 25 GPa.

## Revendications

1. Procédé de fabrication d'un article composite comprenant:
a) une étape d'imprégnation d'une étoffe de renfort avec une composition polyester semi-aromatique à l'état fondu, présentant une viscosité fondue η comprise de 20 à 200 Pa.s, ladite étoffe de renfort étant maintenue à une température de plus ou moins 50°C par rapport à la température de fusion dudit polyester, ladite viscosité fondue étant mesurée à l'aide d'un rhéomètre plan-plan de diamètre 50 mm, sous un balayage en cisaillement par pallier allant de 1 à 160 s⁻¹, par fusion d'un film dudit polyester semi-aromatique d'une épaisseur de 150 µm à une température de 25 à 30°C au-dessus de son point de fusion ; et
b) une étape de refroidissement et ensuite de récupération de l'article composite.

2. Procédé selon la revendication 1, dans lequel le polyester semi-aromatique est choisi dans le groupe constitué des polyesters obtenus par polycondensation d'au moins un diacide aromatique avec un diol aliphatique, cycloaliphatique ou aromatique.

3. Procédé selon la revendication 1 ou 2, dans lequel le polyester semi-aromatique est choisi dans le groupe constitué du polyéthylène téréphtalate (PET), du polybutylène téréphtlalate (PBT) et du polytriméthylène téréphtalate (PTT), le polyéthylène naphtalate (PEN).

4. Procédé selon l'une quelconque des revendications 1 à 3, **caractérisé en ce que** les étoffes de renfort sont des réseaux fibreux ou filamenteux dont les fils et fibres sont choisis parmi les fils et/ou les fibres de carbone, de verre, d'aramides, de polyimides, de lin, de chanvre, de sisal, de coir, de jute, de kenaf et/ou de leur mélange.

5. Procédé selon l'une quelconque des revendications 1 à 4, **caractérisé en ce que** l'on injecte la composition polyester semi-aromatique dans une chambre de moulage comprenant au moins une étoffe de renfort pour réaliser l'imprégnation.

6. Procédé selon l'une quelconque des revendications 1 à 5, **caractérisé en ce que** l'on met en contact une ou plusieurs étoffes de renfort et un ou plusieurs films de polyester semi-aromatique et l'on réalise ladite imprégnation par fusion du polyester.

7. Procédé selon l'une quelconque des revendications 1 à 6, **caractérisé en ce que** l'on met en contact une ou plusieurs étoffes de renfort et de la poudre d'un polyester semi-aromatique et l'on réalise ladite imprégnation par fusion du polyester.

8. Procédé selon l'une quelconque des revendications 1 à 7, **caractérisé en ce que** l'article composite comprend de 25 à 80% en volume d'étoffe de renfort par rapport au poids total de l'article.

## Patentansprüche

1. Verfahren zur Herstellung eines Verbundgegenstands, umfassend :
a) einen Schritt des Imprägnierens eines zur Verstärkung dienenden textilen Flächengebildes mit einer Zusammensetzung von teilaromatischem Polyester in schmelzflüssigem Zustand mit einer Schmelzeviskosität η von 20 bis 200 Pa.s, wobei das zur Verstärkung dienende textile Flächengebilde bei einer Temperatur von plus oder minus 50°C in Bezug auf die Schmelztemperatur des Polyesters gehalten wird, wobei die Schmelzeviskosität mit Hilfe eines Platte-Platte-Rheometers mit einem Durchmesser von 50 mm mit einer stufenweisen Scherungsabtastung von 1 bis 160 s⁻¹ durch Schmelzen einer Folie aus dem teilaromatischen Polyester mit einer Dicke von 150 µm bei einer Temperatur von 25 bis 30°C über dessen Schmelzpunkt gemessen wird; und
b) einen Schritt des Abkühlens und nachfolgenden Gewinnens des Verbundgegenstands.

2. Verfahren nach Anspruch 1, bei dem der teilaromatische Polyester aus der Gruppe bestehend aus durch Polykondensation von mindestens einer aromatischen Disäure mit einem aliphatischen, cycloaliphatischen oder aromatischen Diol erhaltenen Polyestern ausgewählt wird.

3. Verfahren nach Anspruch 1 oder 2, bei dem der teilaromatische Polyester aus der Gruppe bestehend aus Polyethylenterephthalat (PET), Polybutylenterephthalat (PBT) und Polytrimethylenterephthalat (PTT), Polyethylennaphthalat (PEN) ausgewählt ist.

4. Verfahren nach einem der Ansprüche 1 bis 3, **dadurch gekennzeichnet, dass** es sich bei den zur Verstärkung dienenden textilen Flächengebilden um Faser- oder Filamentnetzwerke handelt, deren Fäden und Fasern aus Fäden und/oder Fasern aus Kohlenstoff, Glas, Aramiden, Polyimiden, Leinen, Hanf, Sisal, Kokosbastabfall, Jute, Kenaf und/oder Mischungen davon ausgewählt sind.

5. Verfahren nach einem der Ansprüche 1 bis 4, **dadurch gekennzeichnet, dass** zur Durchführung der Imprägnierung die Zusammensetzung von teil-aromatischem Polyester in eine Formgebungskammer mit dem mindestens einen zur Verstärkung dienenden textilen Flächengebilde eingespritzt wird.

6. Verfahren nach einem der Ansprüche 1 bis 5, **dadurch gekennzeichnet, dass** ein oder mehrere zur Verstärkung dienende textile Flächengebilde und eine oder mehrere Folien aus teilaromatischem Polyester miteinander in Berührung gebracht werden und die Imprägnierung durch Schmelzen des Polyesters durchgeführt wird.

7. Verfahren nach einem der Ansprüche 1 bis 6, **dadurch gekennzeichnet, dass** ein oder mehrere zur Verstärkung dienende textile Flächengebilde und Pulver eines teilaromatischen Polyesters miteinander in Berührung gebracht werden und die Imprägnierung durch Schmelzen des Polyesters durchgeführt wird.

8. Verfahren nach einem der Ansprüche 1 bis 7, **dadurch gekennzeichnet, dass** der Verbundgegenstand 25 bis 80 Vol.-% zur Verstärkung dienendes textiles Flächengebilde, bezogen auf das Gesamtgewicht des Gegenstands, umfasst.

## Claims

1. A method of manufacturing a composite article, the method comprising :
a) a step of impregnating a reinforcing fabric with a semi-aromatic polyester composition in a molten state, having a melt viscosity η of from 20 Pa·s to 200 Pa·s, said reinforcing fabric being maintained at a temperature that is plus or minus 50°C relative to the melting point of said polyester, said melt viscosity being measured using a plate-on-plate rheometer of diameter 50 mm, with stepwise scanning of shearing in the range from 1 s⁻¹ to 160 s⁻¹, by melting a film of said semi-aromatic polyester with a thickness of 150 µm at a temperature that is 25 to 30°C above its melting point; and
b) cooling and then recovering the composite article.

2. The method according to claim 1, wherein the semi-aromatic polyester is selected from the group consisting of polyesters obtained by polycondensation of at least one aromatic diacid with an aliphatic, cycloaliphatic or aromatic diol.

3. The method according to claim 1 or 2, wherein the semi-aromatic polyester is selected from the group consisting of polyethylene terephthalate (PET), polybutylene terephthalate (PBT), polytrimethylene terephthalate (PTT), and polyethylene naphthalate (PEN).

4. The method according to anyone of claims 1 to 3, **characterized in that** the reinforcing fabrics are fibrous or filament networks having threads and fibers made of a material selected from the group consisting of carbon, glass, an aramid, a polyimide, flax, hemp, sisal, coir, jute, kenaf and a mixture thereof.

5. The method according to anyone of claims 1 to 4, **characterized in that** the semi-aromatic polyester composition is injected in a molding chamber comprising at least one reinforcing fabric for carrying out the impregnation.

6. The method according to anyone of claims 1 to 5, **characterized in that** one or more reinforcing fabrics and one or more films of semi-aromatic polyester are brought into contact and said impregnation is carried out by melting the polyester.

7. The method according to anyone of claims 1 to 6, **characterized in that** one or more reinforcing fabrics and powder of a semi-aromatic polyester are brought into contact and said impregnation is carried out by melting the polyester.

8. The method according to anyone of claims 1 to 7, **characterized in that** the composite article comprises from 25 to 80 % by volume of reinforcing fabric relative to the total weight of the article.
